# EUROPEAN PATENT SPECIFICATION

(11) **EP 2 491 778 B1**
(45) Date of publication and mention of the grant of the patent: **04.06.2014**
(21) Application number: 12156670.7
(22) Date of filing: 23.02.2012
(51) Int. Cl.: A01C 11/00, A01C 11/02, A01C 13/00, A01G 13/00, A01G 13/02, A01C 5/06

(54) **Planting device and planting method**
Verfahren und Vorrichtung zum pflanzen
Méthode et appareil pour planter

(30) Priority: 24.02.2011 NL 2006289
(43) Date of publication of application: 29.08.2012
(73) Proprietor: Basrijs B.V., 4891 SZ Rijsbergen (NL)
(72) Inventor: Bastiaansen, Cornelis Theodorus Marie, 4891 SZ Rijsbergen (NL)
(74) Representative: Grootscholten, Johannes A.M.

(56) References cited:
- EP-A1- 0 330 919
- EP-A2- 0 040 337
- EP-A2- 0 266 643
- DE-A1- 10 006 477
- US-A- 3 306 239
- US-A- 4 357 884
- US-A- 5 117 580
- US-B1- 7 607 260

## Description

The present invention relates to a method for planting crops and a corresponding planting device.

Known methods comprise all steps in the preamble of the appended independent method claim and known planting devices have all features, elements and components from the preamble from the relevant one of the appended independent device claims.

The known art has a number of drawbacks. When a planting hole has been pierced through the sheeting and into the top surface of the soil ridge, a plant (or other crop) is inserted manually into this planting hole. The frame then travels further. Although the sheeting has the effect of holding the soil ridge in the form in which it was provided, this effect is too limited to prevent deformation of the soil ridge resulting from piercing of the planting hole and insertion therein of the plant, particularly when the planting hole is made close to an upright side of the soil ridge. The soil ridge thus crumbles away, thereby impairing the intended function thereof.

Furthermore, the planting hole remains open after insertion of a plant (or other crop); loose soil resulting from deformation of the soil ridge under the sheeting pulls on the sheeting which is stretched at the position of the planting hole and remains open. The soil ridge is hereby exposed to influences such as the ingress of rain and other precipitation, whereby the intended purpose of the sheeting is defeated, or at least considerably limited.

EP 0 266 643 discloses another method and device for crop planting (in the absence of a soil ridge), wherein crop planting is performed after perforating a film/sheet.

The present invention has for its object to obviate or at least reduce the inconveniences and/or shortcomings of the known art, for which purpose a method and a planting device comprise in combination all steps, features, elements and components of the relevant one of the appended independent claims.

Piercing the planting hole with a form diverging toward the top surface brings about a temporary deformation of the soil ridge. The diverging form serves to enable orientation of the soil ridge. By closing the planting hole after placing of the crop by pushing against at least one of the upright sides of the soil ridge, the (temporary) deformation can be almost wholly rectified in order to restore the previously provided form of the soil ridge. The planting hole in the top surface is hereby pressed closed again around an inserted plant, this from the side of the upright side of the soil ridge. Stretch of and pull on the sheeting are thus rectified and the hole in the sheeting closes around the inserted plant in order to thus (better) guarantee the desired environment for the roots thereof in the soil ridge. The planting device according to the invention comprises for this purpose a pusher and the piercing device at least one piercer with a diverging form.

The planting device and the piercing device can be embodied individually or in combination so as to together put into practice the steps according to the method.

The dependent claims relate to preferred embodiments, to which the invention is not limited.

In an embodiment the method according to the invention further comprises of: pressing against the top surface of the soil ridge after placing of the crop. This preferably takes place adjacently of the planting hole, just as the pushing against the substantially upright side of the soil ridge, and still more preferably substantially simultaneously therewith. Restoring the soil ridge to its original form can thus be improved still further.

In an embodiment the method according to the invention comprises the additional or alternative feature that: the soil ridge has at least approximately a centre line over the top surface thereof, wherein the method further comprises of:
piercing the planting hole to the side of the centre line. This makes it possible for planting holes also to be arranged on the other side of the centre line (and optionally also on the centre line), and two or more rows of planting holes can be made available in a single soil ridge for setting plants (or other crops). In embodiments with additional pressing against the top surface and setting of plants in a row (e.g. along the centre line) the pressing on the top surface can take place on either side of such a row. Pressing of the soil ridge will in general preferably take place on either side relative to each planting hole. It can be favourable here for piercing of the planting hole to comprise of: piercing the planting hole with a form diverging substantially toward an upright side closest to the planting hole. This achieves that deformation of the soil ridge occurs for the most part in the direction of the associated side, and this can be pushed back most effectively from the side which is pushed according to the method in order to restore the soil ridge as far as possible to its original form. The method can have the feature here of pushing against at least the upright side lying closest to the planting hole after placing of the crop. The soil ridge is hereby restored most effectively to the original form thereof.

In an embodiment the method according to the invention comprises the additional or alternative feature of: piercing more than one planting hole in at least two rows of planting holes oriented in the longitudinal direction of the soil ridge. More crops can thus be placed in a single soil ridge where in the prior art this was only possible in a single row along a centre line of the soil ridge, precisely because of the deformation or crumbling away of the soil ridge, and it is exactly this crumbling or deformation which is now rectified by the present invention. The method can have the feature here of distributing the rows uniformly in a width direction transversely of the longitudinal direction of the top surface. A maximum utilization of the soil ridge with crops can thus be realized while taking into account a minimum distance between the crops. If necessary, the planting holes in separate rows are offset relative to each other to enable realization of a desired minimum distance between crops and maximum utilization.

As stated above, the invention further relates to a planting device.

In a preferred embodiment the planting device according to the invention further comprises a press for pressing on the top surface.

In an embodiment the planting device according to the invention comprises the additional or alternative feature of: an alignment for holding at least a part of the displaceable frame oriented in the longitudinal direction of the soil ridge. A frame such as that of the planting device according to the present invention is often not equipped with its own drive; a tractor does after all provide the obvious and usually already available solution for this purpose. The frame of the planting device is displaceable relative to and over the soil ridge, but may drift within a certain range relative to the soil ridge with the tractor or in a displacement of its own. Workers can sit on the frame or an automated plant/setter can be arranged thereon. The alignment serves here to prevent the application of pressure to at least one of the sides of the soil ridge possibly resulting in undesirable deformation of this soil ridge (instead of restoring the original form thereof), and to hold the workers or automated planter/setter aligned with the planting holes. The device can have the feature here that the alignment comprises the pusher and a runner against a side lying opposite the pusher relative to the soil ridge. Enclosing the soil ridge between the pusher and the runner provides a surprisingly effective method of following the soil ridge (even if this is found not to be exactly rectilinear and in the case of drifting of the tractor or driving of the frame). The method can have the feature here that the runner is a pusher forming part of the closing mechanism. The runner then pushes against the other side, and the pusher and the runner, likewise forming a pusher, then together enclose the soil ridge in order to follow it as efficiently as possible. In an embodiment the planting device according to the invention comprises the additional or alternative feature that: the alignment comprises a substantially U-shaped sub-frame with hinges at the corner points and mounted pivotally on the frame where at least the pusher is arranged on the sub-frame. Alternatively, a sub-frame movable laterally over or on the frame can be provided. The U-shaped or any other sub-frame remains aligned on the soil ridge by means of the alignment, while the soil ridge need not be exactly rectilinear or when the tractor or drive of the device drifts to some extent relative to the soil ridge.

In an embodiment the planting device according to the invention comprises the additional or alternative feature that: the frame supports on running wheels which are adjustable in at least one of the aspects of: height relative to the frame; distance in a width direction transversely of the direction of movement of the frame, and other setting(s). In such an embodiment the moving mechanism of the frame can be adapted in favourable manner to the height and/or width dimensions of a soil ridge.

Aspects of embodiments of the present invention will be described hereinbelow on the basis of an accompanying drawing, the description and/or drawing being in no way intended as limitation to the present invention, and in which drawing the same or similar elements, components and steps can be designated with the same reference numerals. In the drawing:
Fig. 1 is a perspective view of unknown soil ridge covered with sheeting;
Fig. 2A-2C show successive steps in a possible embodiment of the method according to the invention in a cross-sectional view along the line II-II in Fig. 1;
Fig. 3 is a perspective view of a possible embodiment of a planting device according to the present invention; and
Fig. 4 is a perspective view of a possible embodiment of a piercing device in an aspect of the present invention other than the planting device.

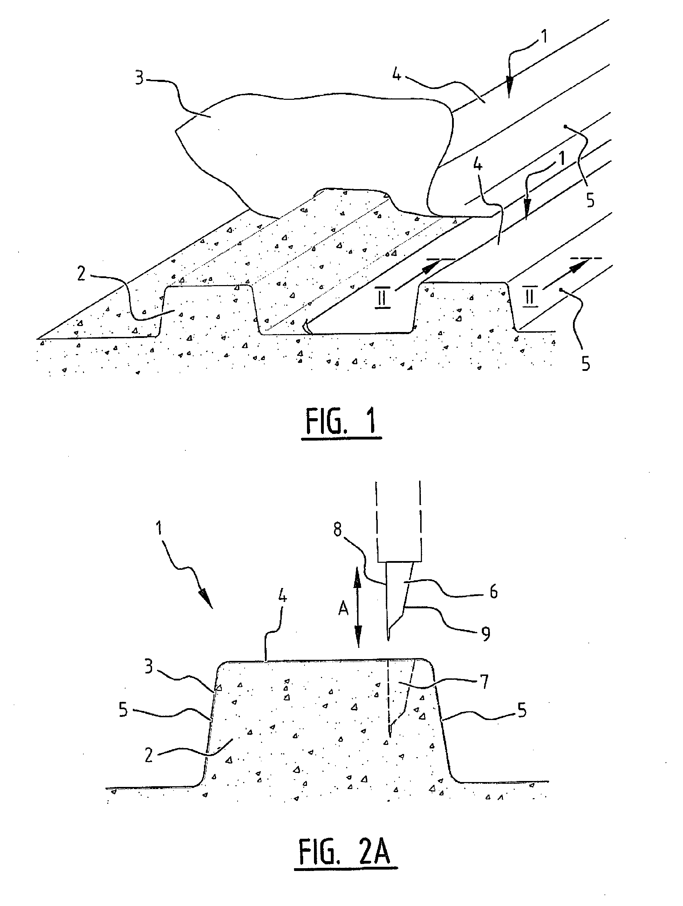

Fig. 1 shows a soil ridge 1. This comprises a mound 2 of soil, earth or other substrate, and is lined or covered with sheeting 3 of for instance synthetic material such as plastic. Mound 2 is elongate and can be formed manually or mechanically, this being outside the scope of the present invention.

Each soil ridge 1 comprises a top surface 4 and two substantially upright sides 5.

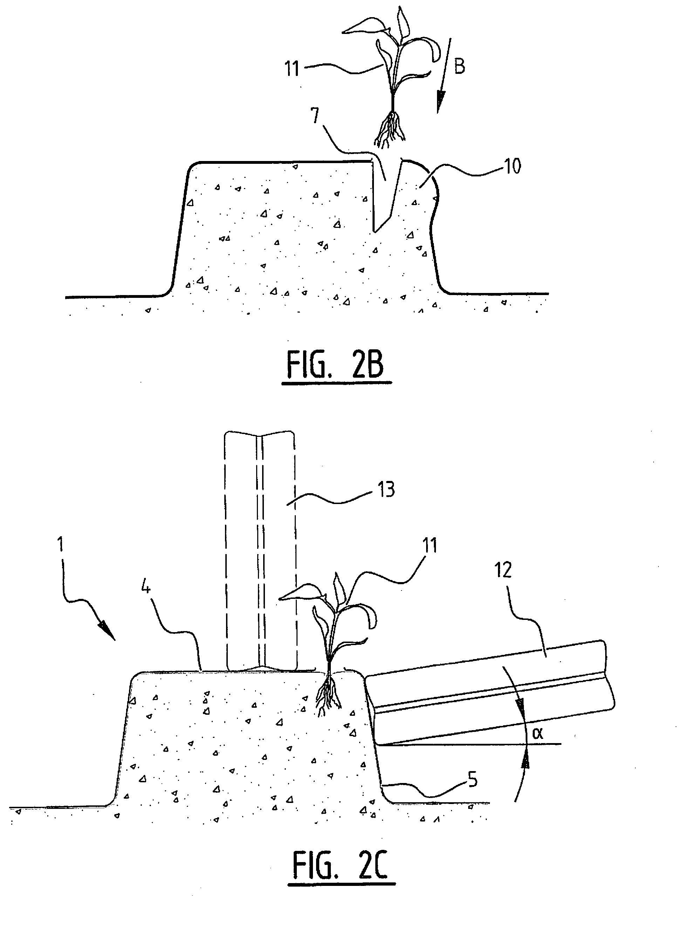

Fig. 2A shows a piercer 6 which in use has a form diverging in upward direction. The form is such that the side 8 of the piercer directed toward the centre of soil ridge 1 is substantially vertical in order to cause the least possible deformation of the soil ridge, while the opposite side 9 of the piercer oriented toward the side 5 of soil ridge 1 has an form diverging outward relative to the other side 8. Piercer 6 can be driven in a reciprocal movement indicated with double arrow A in order to form planting hole 7. The reciprocal movement according to arrow A drives the piercer 6 through sheeting 3 into mound 2, this into the top surface 4 of soil ridge 1. A deformation 10 as shown in Fig. 2B is thus generated and a plant 11 (or other crop) can be inserted into the planting hole in the direction of arrow B. The deformation 10 is intentionally oriented outward relative to soil ridge 1, this being an extremely surprising development relative to previous techniques.

Equally intentional is the subsequent restoring of the soil ridge to its original form as shown in Fig. 2C. Employed for this purpose is at least one pusher in the form of a running wheel 12 which lies at an angle α corresponding to the position of the substantially upright side 5 of soil ridge 1. Running wheel 12 pushes back the deformation 10 deliberately formed by piercing the planting hole 7 in order to restore the original form of side 5 of soil ridge 1.

Fig. 2C further shows the use of a press in the form of roller 13. This exerts a pressure on top surface 4 of soil ridge 1. This prevents a pushing action of running wheel 12 on the side 5 of soil ridge 1 resulting in deformation of top surface 4 of soil ridge 1.

In an embodiment with for instance two rows of mutually adjacent planting holes a row of planting holes can be arranged on the left in Fig. 2C adjacently of roller 13. An additional running wheel 12 (not shown) can be provided here on or at the side 5 opposite the running wheel 12 shown in Fig. 2C. If the soil ridge were to be wider, at least relative to the width of roller 13, another row of planting holes 7 (so three rows in total) could then be provided in the centre on soil ridge 1, wherein two rollers 13 are then preferably provided on either side of such a central row (not shown).

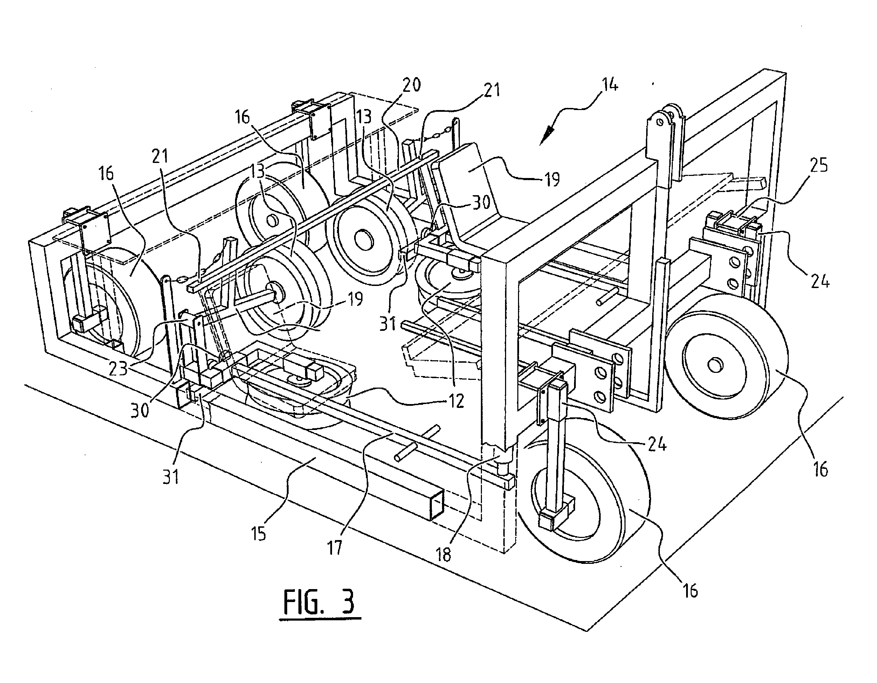

Fig. 3 shows a perspective view of a planting device 14 according to the present invention. Planting device 14 comprises a frame 15 which can travel on or over wheels 16. The frame forms a rectangle. Arranged on or at frame 15 is a pivoting frame 17 which is substantially U-shaped and suspended with hinges 18 from frame 15, on or at the front side thereof in the light of the orientation of seats 19 on pivoting frame 17. Workers can sit on seats 19 in order to place plants 11 in planting holes 7 as shown in Fig. 2B. Alternatively, an automated plant/setter can be arranged on pivoting frame 17. A transverse beam 20 with hinges 21 is arranged above and behind seats 20.

When planting device 14 is pulled forward (or moved forward with its own drive) pivoting frame 17 can pivot over hinges 18 and 21. Running wheels 12 each form a runner here to hold pivoting frame 17 aligned on the soil ridge, since - as shown in Fig. 2C - running wheels 12 lie against the substantially upright sides 5 of soil ridge 1. Frame 15 may drift as it moves forward, or the soil ridge may vary from an exactly straight line, but pivoting frame 17 will follow precisely the direction of soil ridge 1.

Rollers 13 each rest on top surface 4 of soil ridge 1 via a pivot shaft 22 which is connected via a hinge 23 to pivoting frame 17.

The position of wheels 16 is adjustable in height and width relative to frame 15 using settings 24 for the height and 25 for the width.

Pivoting frame 17 supports via wheels 30 on support beams 31 which are mounted fixedly on frame 15 in order to guide and support pivoting movement of the pivoting frame. An alternative in the form of a sliding frame, which is laterally displaceable relative to or over frame 15 and which can for instance follow a linear lateral movement relative to or over frame 15, is also possible within the scope of the present invention.

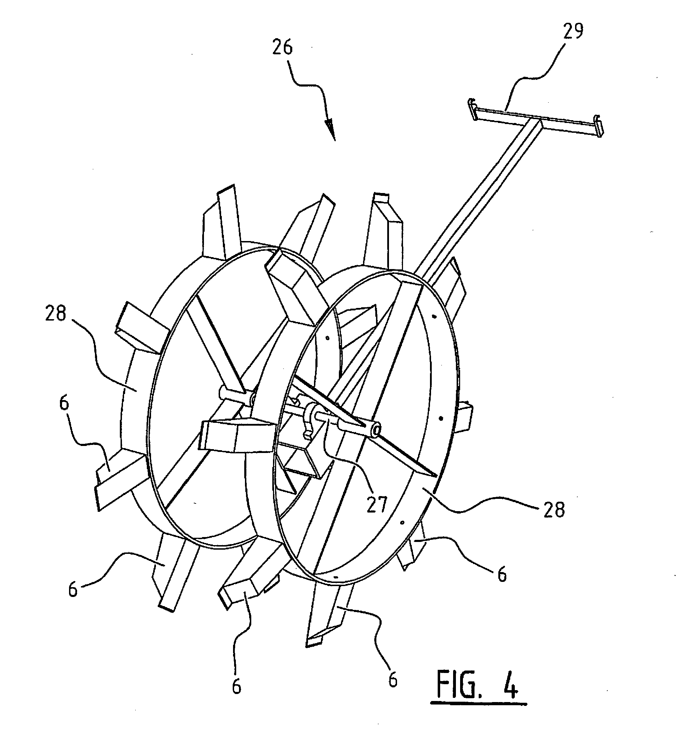

Fig. 4 shows a piercing device 26 which can form part of the planting device but which will much rather take a separate form as shown in Fig. 4. Piercing device 26 comprises a shaft 27 with two wheels 28 thereon having a number of piercers 6 distributed round the periphery thereof. Piercing device 26 can be rolled over soil ridge 1 by being drawn forward with a handle 29. The piercers are preferably short so that they do not tear the sheeting 3 when piercing device 26 rolls over soil ridge 1. The piercing device can additionally comprise sensors (not shown) for the purpose of holding the piercing device, in contact with the soil ridge, in particular the sides 5 thereof, centred on the soil ridge, in particular the top surface thereof. The piercing device can comprise only a single wheel 28 or, conversely, more than two wheels 28. The planting device can comprise a sliding frame (not shown) instead of the pivoting frame 17 shown in Fig. 3.

Seats (on the pivoting frame in the figures) can further be omitted. Plants can be inserted manually into the planting holes in the soil ridge by workers walking in front of the planting device, and the planting device - notwithstanding the term "planting device" used therefor here - can then be utilized solely to restore the soil ridge as far as possible to its original form. A reason for a user to opt for such use may be that two workers, each sitting on a seat on the pivoting frame, cannot generate sufficient speed when inserting plants or other crops into the planting holes. The situation is (perhaps) different when an automated plant/setter is used on the pivoting frame, and for this reason we persist here in the use of the term planting device. The top surface of the soil ridge can comprise a bulge or roof-like form in contrast to the horizontal flat form thereof shown in the drawing. All combinations of features and permutations of possibilities are explicitly possible and fall within the scope of the invention defined in the claims.

It will thus be immediately apparent that many additional and alternative embodiments are possible relative to those described above and shown in the drawing and fall within the scope of protection defined in the claims, in particular the independent claims.

## Claims

1. A method for planting crops, comprising of:
- forming an elongate soil ridge (2) with upright sides (5) on either side and a top surface (4);
- at least partially covering the soil ridge (2) with a sheeting (3);
- piercing at least one planting hole (7) through the sheeting in the top surface (4) of the soil ridge; and
- placing a crop in the planting hole (7),
- piercing the planting hole (7) with a form diverging toward the top surface (4); and
- closing the planting hole (7) after placing of the crop by pushing against at least one of the upright sides (5) of the soil ridge (2).

2. The method as claimed in claim 1, further comprising of: pressing against the top surface (4) of the soil ridge (2) after placing of the crop.

3. The method as claimed in claim 1 or 2, wherein the soil ridge (2) has at least approximately a centre line over the top surface (4) thereof, wherein the method further comprises of: piercing the planting hole (7) to the side of the centre line.

4. The method as claimed in claim 3, wherein piercing of the planting hole (7) comprises of: piercing the planting hole (7) with a form diverging substantially toward an upright side (5) closest to the planting hole (7).

5. The method as claimed in claim 4, comprising of pushing against at least the upright side (5) lying closest to the planting hole (7) after placing of the crop.

6. The method as claimed in at least one of the foregoing claims, further comprising of piercing more than one planting hole (7) in at least two rows of planting holes (7) oriented in the longitudinal direction of the soil ridge (2).

7. The method as claimed in claim 6, comprising of distributing the rows uniformly in a width direction transversely of the longitudinal direction of the top surface (4) .

8. A planting device (14) for planting crops in an elongate soil ridge (2) having upright sides (5) on either side and a top surface (4) and covered with a sheeting (3), and wherein at least one planting hole (7) is pierced through the sheeting in the top surface of the soil ridge, which planting device comprises a frame (15) displaceable substantially in the longitudinal direction of the soil ridge (2), wherein
- the planting hole (7) is pierced with a form diverging toward the top surface; and the device comprises
- a closing mechanism for closing the planting hole after placing of the crop in the planting hole (7) by the setter, which closing mechanism comprises a pusher (12) for pushing against at least one of the upright sides (5) of the soil ridge (2).

9. The planting device as claimed in claim 8, further comprising a press (13) for pressing on the top surface (4).

10. The planting device as claimed in claim 8 or 9, further comprising an alignment for holding at least a part of the displaceable frame (15) oriented in the longitudinal direction of the soil ridge (2).

11. The planting device as claimed in claim 10, wherein the alignment comprises the pusher (12) and a runner (12) against a side lying opposite the pusher relative to the soil ridge (2).

12. The planting device as claimed in claim 10, wherein the runner (12) is a pusher (12) forming part of the closing mechanism.

13. The planting device as claimed in at least one of the foregoing claims 10-12, wherein the alignment comprises a substantially U-shaped sub-frame (17) with hinges at the corner points and mounted pivotally on the frame (15) where at least the pusher (12) is arranged on the sub-frame (17).

14. The planting device as claimed in at least one of the foregoing claims 8-13, wherein the frame (15) supports on running wheels (16) which are adjustable in at least one of the aspects of: height relative to the frame (15); distance in a width direction transversely of the direction of movement of the frame (15), and other setting(s).

## Patentansprüche

1. Ein Verfahren zum Pflanzen von Feldfrüchten, aufweisend:
- Ausbilden einer langgestreckten Erderhöhung (2) mit aufrechten Seiten (5) auf jeder Seite und einer oberen Fläche (4),
- zumindest teilweises Bedecken der Erderhöhung (2) mit einer Abdeckfolie (3),
- Stechen von mindestens einem Pflanzloch (7) durch die Abdeckfolie hindurch in die obere Fläche (4) der Erderhöhung, und
- Platzieren einer Feldfrucht in dem Pflanzloch (7),
- Stechen des Pflanzlochs (7) mit einer Form, die in Richtung zu der oberen Fläche (4) auseinandergeht, und
- Schließen des Pflanzlochs (7) nach dem Platzieren der Feldfrucht durch Drücken gegen mindestens eine der aufrechten Seiten (5) der Erderhöhung (2).

2. Das Verfahren gemäß Anspruch 1, ferner aufweisend das Drücken gegen die obere Fläche (4) der Erderhöhung (2) nach dem Platzieren der Feldfrucht.

3. Das Verfahren gemäß Anspruch 1 oder 2, wobei die Erderhöhung (2) zumindest ungefähr eine Mittellinie über der oberen Fläche (4) davon aufweist, wobei das Verfahren ferner das Stechen des Pflanzlochs (7) zu der Seite der Mittellinie aufweist.

4. Das Verfahren gemäß Anspruch 3, wobei das Stechen des Pflanzlochs (7) das Stechen des Pflanzlochs (7) mit einer Form aufweist, die zu einer aufrechten Seite (5) hin, die am nächsten bei dem Pflanzloch (7) liegt, im Wesentlichen auseinandergeht.

5. Das Verfahren gemäß Anspruch 4, aufweisend das Drücken gegen zumindest die aufrechte Seite (5), die am nächsten bei dem Pflanzloch (7) liegt, nach dem Platzieren der Feldfrucht.

6. Das Verfahren gemäß mindestens einem der vorhergehenden Ansprüche, ferner aufweisend das Stechen von mehr als einem Pflanzloch (7) in mindestens zwei Reihen von Pflanzlöchern (7), die in der Längsrichtung der Erderhöhung (2) ausgerichtet sind.

7. Das Verfahren gemäß Anspruch 6, aufweisend das gleichmäßige Verteilen der Reihen in einer Breitenrichtung quer zu der Längsrichtung der oberen Fläche (4).

8. Eine Pflanzvorrichtung (14) zum Pflanzen von Feldfrüchten in eine langgestreckte Erderhöhung (2), die aufrechte Seiten (5) auf jeder Seite und eine obere Fläche (4) aufweist und mit einer Abdeckfolie (3) bedeckt ist, und wobei mindestens ein Pflanzloch (7) durch die Abdeckfolie hindurch in die obere Fläche der Erderhöhung gestochen wird, wobei die Pflanzvorrichtung einen Rahmen (15) aufweist, der im Wesentlichen in der Längsrichtung der Erderhöhung (2) verlagerbar ist, wobei
- das Pflanzloch (7) mit einer Form gestochen wird, die zu der oberen Fläche hin auseinandergeht, und die Vorrichtung aufweist:
- einen Schließmechanismus zum Schließen des Pflanzlochs nach dem Platzieren der Feldfrucht in dem Pflanzloch (7) mittels des Setzers, wobei der Schließmechanismus eine Drückvorrichtung (12) zum Drücken gegen mindestens eine der aufrechten Seiten (5) der Erderhöhung (2) aufweist.

9. Die Pflanzvorrichtung gemäß Anspruch 8, ferner aufweisend eine Pressvorrichtung (13) zum Aufpressen auf die obere Fläche (4).

10. Die Pflanzvorrichtung gemäß Anspruch 8 oder 9, ferner aufweisend eine Ausrichtung zum Halten von zumindest einem Teil des verlagerbaren Rahmens (15) ausgerichtet in der Längsrichtung der Erderhöhung (2).

11. Die Pflanzvorrichtung gemäß Anspruch 10, wobei die Ausrichtung die Drückvorrichtung (12) und eine Laufrolle (12) gegen eine Seite aufweist, die bezüglich der Erderhöhung (2) zu der Drückvorrichtung entgegengesetzt liegt.

12. Die Pflanzvorrichtung gemäß Anspruch 10, wobei die Laufrolle (12) eine Drückvorrichtung (12) ist, die Teil des Schließmechanismus ist.

13. Die Pflanzvorrichtung gemäß mindestens einem der vorhergehenden Ansprüche 10 bis 12, wobei die Ausrichtung einen im Wesentlichen U-förmigen Teilrahmen (17) mit Gelenken an den Eckpunkten aufweist, der ferner gelenkig an dem Rahmen (15) montiert ist, wobei zumindest die Drückvorrichtung (12) an dem Teilrahmen (17) angeordnet ist.

14. Die Pflanzvorrichtung gemäß mindestens einem der vorhergehenden Ansprüche 8 bis 13, wobei der Rahmen (15) auf Laufrädern (16) abgestützt ist, die gemäß mindestens einem der folgenden Aspekte verstellbar sind: Höhe bezüglich des Rahmens (15), Abstand in einer Breitenrichtung quer zu der Bewegungsrichtung des Rahmens (15) und (einer) anderen Einstellung(en).

## Revendications

1. Procédé pour planter des produits agricoles, comprenant :
- la formation d'une crête de terre (2) allongée avec des côtés verticaux (5) de chaque côté et une surface supérieure (4) ;
- le recouvrement au moins partiellement de la crête de terre (2) avec une feuille (3) ;
- le perçage d'au moins un trou de plantation (7) à travers la feuille dans la surface supérieure (4) de la crête de terre ; et
- le placement d'un produit agricole dans le trou de plantation (7),
- le perçage du trou de plantation (7) avec une forme divergeant vers la surface supérieure (4) ; et
- la fermeture du trou de plantation (7) après le placement du produit agricole en poussant contre au moins l'un des côtés verticaux (5) de la crête de terre (2).

2. Procédé selon la revendication 1, comprenant en outre : la pression contre la surface supérieure (4) de la crête de terre (2) après le placement du produit agricole.

3. Procédé selon la revendication 1 ou 2, dans lequel la crête de terre (2) comporte au moins approximativement une ligne centrale sur la surface supérieure (4) de celle-ci, dans lequel le procédé comprend en outre : le perçage du trou de plantation (7) vers le côté de la ligne centrale.

4. Procédé selon la revendication 3, dans lequel le perçage du trou de plantation (7) comprend : le perçage du trou de plantation (7) avec une forme divergeant sensiblement vers un côté vertical (5) le plus proche du trou de plantation (7).

5. Procédé selon la revendication 4, comprenant la poussée contre au moins le côté vertical (5) se trouvant le plus près du trou de plantation (7) après le placement du produit agricole.

6. Procédé selon au moins l'une des revendications précédentes, comprenant en outre le perçage de plusieurs trous de plantation (7) en au moins deux rangées de trous de plantation (7) orientées dans la direction longitudinale de la crête de terre (2).

7. Procédé selon la revendication 6, comprenant la répartition des rangées uniformément dans une direction de largeur transversalement à la direction longitudinale de la surface supérieure (4).

8. Dispositif de plantation (14) pour planter des produits agricoles dans une crête de terre (2) allongée, comportant des côtés verticaux (5) de chaque côté et une surface supérieure (4) et recouverte d'une feuille (3), et dans lequel au moins un trou de plantation (7) est percé à travers la feuille dans la surface supérieure de la crête de terre, lequel dispositif de plantation comprend un châssis (15) pouvant être déplacé sensiblement dans la direction longitudinale de la crête de terre (2), dans lequel
- le trou de plantation (7) est percé avec une forme divergeant vers la surface supérieure ; et le dispositif comprend :
- un mécanisme de fermeture pour fermer le trou de plantation après le placement du produit agricole dans le trou de plantation (7) par le dispositif de placement, lequel mécanisme de fermeture comprend un élément pousseur (12) pour pousser contre au moins l'un des côtés verticaux (5) de la crête de terre (2).

9. Dispositif de plantation selon la revendication 8, comprenant en outre un élément presseur (13) pour presser la surface supérieure (4).

10. Dispositif de plantation selon la revendication 8 ou 9, comprenant en outre un dispositif d'alignement pour maintenir au moins une partie du châssis déplaçable (15) orientée dans la direction longitudinale de la crête de terre (2).

11. Dispositif de plantation selon la revendication 10, dans lequel le dispositif d'alignement comprend l'élément pousseur (12) et un élément de guidage (12) contre un côté se trouvant à l'opposé du élément pousseur par rapport à la crête de terre (2).

12. Dispositif de plantation selon la revendication 10, dans lequel l'élément de guidage (12) est un élément pousseur (12) faisant partie du mécanisme de fermeture.

13. Dispositif de plantation selon au moins l'une des revendications 10 à 12 précédentes, dans lequel le dispositif d'alignement comprend un châssis secondaire (17) sensiblement en forme de U, comportant des articulations au niveau des points d'angle et monté de manière pivotante sur le châssis (15), où au moins l'élément pousseur (12) est agencé sur le châssis secondaire (17).

14. Dispositif de plantation selon au moins l'une des revendications 8 à 13 précédentes, dans lequel le châssis (15) est maintenu par des roues de roulement (16) qui peuvent être ajustées quant à au moins l'un des aspects suivants : la hauteur par rapport au châssis (15) ; la distance dans une direction de largeur transversalement à la direction de mouvement du châssis (15), et d'autres réglages.
